# EUROPÄISCHE PATENTSCHRIFT

(11) **EP 3 180 224 B1**
(45) Veröffentlichungstag und Bekanntmachung des Hinweises auf die Patenterteilung: **15.05.2019**
(21) Anmeldenummer: 15766381.6
(22) Anmeldetag: 13.08.2015
(51) Int. Cl.: B62B 3/04, A22B 7/00, B62B 5/00, B62B 5/08

(54) **TRANSPORTKARRE ZUM TRANSPORTIEREN VON GEGENSTÄNDEN ODER TIERKADAVERN**
CART FOR TRANSPORTING ITEMS OR CARCASS
CHARIOT POUR TRANSPORTER DES OBJETS OU CADAVRES

(30) Priorität: 15.08.2014 DE 102014012313
(43) Veröffentlichungstag der Anmeldung: 21.06.2017
(73) Patentinhaber: Meier, Wolfgang, 32699 Extertal (DE)
(72) Erfinder: Meier, Wolfgang, 32699 Extertal (DE)
(74) Vertreter: Müller, Thomas
(86) Internationale Anmeldenummer: PCT/DE2015/000412
(87) Internationale Veröffentlichungsnummer: WO 2016/023537

(56) Entgegenhaltungen:
- EP-A1- 1 630 063
- DE-U1-202013 007 716
- IT-A1- CR20 090 021
- US-A- 4 052 080
- US-A- 5 620 193
- US-A1- 2007 194 560

## Beschreibung

### Stand der Technik

Die Erfindung geht aus von einer Transportkarre, nach der Gattung des Anspruchs 1, und ein Verfahren zum Transportieren von Gegenständen oder Tierkadavern mittels einer Transportkarre, nach der Gattung des Anspruchs 19.

Transportkarren, wie sie beispielsweise in der amerikanischen Patentanmeldung US 2007/194560 A1 oder der italienischen Offenlegungsschrift IT CR 20 090 021 A1 beschrieben werden, sind zwei- oder mehrrädrige Wagen, die zum Transport von Gegenständen, Tieren oder Kadavern dienen. Als zweirädriger Transportkarren ist insbesondere die Sackkarre bekannt, die ein Grundgestell (Rahmen) aufweist, an dessen unterem Ende eine starre Radachse mit zwei Laufrädern und ein nach vorne ragender Träger, der gleichzeitig als Standfuss dient und meistens als Aufnahmeplatte ausgebildet ist, angeordnet sind. Zur Aufnahme von Transportgütern wird der Träger unter das Transportgut geschoben, um anschließend zum Abheben des Transportgutes vom Boden die Sackkarre um die Laufräder zu verschwenken. Nachteilig ist aber, dass je nach Gewicht des Transportgutes der Einsatz von erheblicher Muskelkraft erforderlich ist, um, z. B. durch zumindest einseitiges Anheben des Transportgutes den Träger unter das Transportgut zu schieben.

Auch in der Landwirtschaft kommen Sackkarren sehr häufig zum Einsatz. Dabei finden sie auch als so genannte Kadaverkarren Verwendung, so dass sie zum Transport von verendeten Tieren z.B. aus dem Stall dienen. Aus der Gebrauchsmusterschrift DE 200 06 027 U1, der amerikanischen Patentschrift US 4 052 080 A und der amerikanischen Patentschrift US 5 620 193 A sind Handkarren insbesondere zum Entfernen von Tier-Kadavern, insbesondere von Schweine-Kadavern aus einem Sauenstall, bekannt, bei dem eine an dem Traggestell angeordnete Seilwinde dazu dient, einen an dem Seil angehängten Tierkadaver auf einen geneigt angeordneten Träger und das Traggestell zu ziehen. Um den Kadaver mit der Seilwinde auf den Handkarren zu ziehen, ist aber ebenfalls eine erhebliche Muskelkraft der Bedienperson von Nöten. Daher gibt es mittlerweile auch Kadaverkarren die eine elektrisch angetriebene Seilwinde aufweisen. Des Weiteren sind bereits Handkarren bekannt, die einen elektrischen Fahrantrieb aufweisen, so dass auch der Transport für die Bedienperson erleichtert wird. Nachteilig ist allerdings, dass die Bedienperson den Kadaver zur Anbringung des Seils an dem Kadaver berühren muss, was aus hygienischen Gründen als problematisch gesehen wird.

### Die Erfindung und ihre Vorteile

Das erfindungsgemäße Transportkarre, mit den kennzeichnenden Merkmalen des Anspruchs 1, und das erfindungsgemäße Verfahren zum Transportieren von Gegenständen oder Tierkadavern mittels einer Transportkarre, mit den kennzeichnenden Merkmalen des Anspruchs 19, haben demgegenüber den Vorteil, dass die Transportkarre eine einen Boden aufweisende Lademulde aufweist, die einen Bereich aufweist, der an einer einem Lenker oder einem mindestens einem Handgriff abgewandten Seite der Lademulde angeordnet ist und sich bis zu einem vorderen Ende der Lademulde erstreckt, wobei der Bereich mindestens eine einen Teil des Bodens der Lademulde bildende Auflade- und/oder Ablade-Vorrichtung, die in beide Richtungen rotierbar ist, aufweist und eine Auflade- und/oder Ablade-Vorrichtung am vorderen Ende der Lademulde angeordnet ist, wobei die mindestens eine Auflade- und/oder Ablade-Vorrichtung einen Antrieb aufweist, wodurch ein Be- und/oder Entladen ermöglicht wird, so dass der zu transportierende oder der transportierte Gegenstand oder der zu transportierende oder der transportierte Tierkadaver nicht von einer Bedienperson berührt werden muss.

Nach einer vorteilhaften Ausgestaltung der erfindungsgemäßen Transportkarre nimmt mindestens eine Auflade- und/oder Ablade-Vorrichtung zumindest teilweise die Breite der Lademulde ein.

Nach einer zusätzlichen vorteilhaften Ausgestaltung der erfindungsgemäßen Transportkarre weist mindestens eine Auflade- und/oder Ablade-Vorrichtung einen runden oder eckigen Querschnitt auf.

Nach einer zusätzlichen vorteilhaften Ausgestaltung der erfindungsgemäßen Transportkarre ist mindestens eine Auflade- und/oder Ablade-Vorrichtung rohrförmig.

Nach einer zusätzlichen vorteilhaften Ausgestaltung der erfindungsgemäßen Transportkarre weist mindestens eine Auflade- und/oder Ablade-Vorrichtung mindestens einen Zinken, mindestens eine Leiste, mindestens eine Zackenleiste und/oder ein Förderband auf.

Nach einer diesbezüglichen vorteilhaften Ausgestaltung der erfindungsgemäßen Transportkarre sind der Antrieb eine Steuerung aufweist, durch die die Drehrichtung und/oder Drehgeschwindigkeit steuerbar.

Nach einer zusätzlichen vorteilhaften Ausgestaltung der erfindungsgemäßen Transportkarre ist der Antrieb beispielsweise ein Elektromotor oder Verbrennungsmotor.

Nach einer zusätzlichen vorteilhaften Ausgestaltung der erfindungsgemäßen Transportkarre weist die Lademulde mindestens eine drehbar gelagerte Rolle (Transportrolle) auf.

Nach einer diesbezüglichen vorteilhaften Ausgestaltung der erfindungsgemäßen Transportkarre nimmt mindestens eine Rolle zumindest teilweise die Breite der Lademulde ein.

Nach einer zusätzlichen vorteilhaften Ausgestaltung der erfindungsgemäßen Transportkarre weist die Transportkarre einen Fahrantrieb auf.

Nach einer diesbezüglichen vorteilhaften Ausgestaltung der erfindungsgemäßen Transportkarre weist der Antrieb eine Steuerung auf, durch die die Fahrtrichtung und/oder Fahrgeschwindigkeit steuerbar.

Nach einer zusätzlichen vorteilhaften Ausgestaltung der erfindungsgemäßen Transportkarre ist der Antrieb beispielsweise ein Elektromotor oder ein Verbrennungsmotor.

Nach einer zusätzlichen vorteilhaften Ausgestaltung der erfindungsgemäßen Transportkarre weist die Transportkarre mindestens ein Stützrad (z.B. Rolle) und/oder mindestens eine Stützkufe auf.

Nach einer diesbezüglichen vorteilhaften Ausgestaltung der erfindungsgemäßen Transportkarre ist das mindestens eine Stützrad um eine vertikale Achse schwenkbar.

Nach einer zusätzlichen vorteilhaften Ausgestaltung der erfindungsgemäßen Transportkarre weist die Transportkarre eine Sitzfläche und/oder eine Stehfläche für eine Bedienperson auf.

Nach einer diesbezüglichen vorteilhaften Ausgestaltung der erfindungsgemäßen Transportkarre sind die Sitzfläche und/oder die Stehfläche an einem vom Rahmen an- und abkoppelbaren Anhänger angeordnet. Dies hat den Vorteil, dass eine Bedienperson mit der Transportkarre mitfahren kann, so dass er nicht hinter ihr herlaufen muss.

Nach einer zusätzlichen vorteilhaften Ausgestaltung der erfindungsgemäßen Transportkarre weist der Anhänger mindestens zwei Räder auf.

Nach einer zusätzlichen vorteilhaften Ausgestaltung der erfindungsgemäßen Transportkarre ist die Transportkarre eine Kadaverkarre.

Nach einer vorteilhaften Ausgestaltung des erfindungsgemäßen Verfahrens zum Transportieren von Gegenständen oder Tierkadavern mittels einer Transportkarre, die einen Rahmen, mindestens eine Achse mit beidseitig mindestens je einem Rad, einen Lenker oder mindestens einen Handgriff und eine Lademulde aufweist, wobei die Transportkarre mindestens eine Auflade- und/oder Ablade-Vorrichtung aufweist, wobei die mindestens eine Auflade- und/oder Ablade-Vorrichtung einen Antrieb aufweist, wobei die Transportkarre zum Beladen der Lademulde an den zu transportierenden Gegenstand oder den zu transportierenden Tierkadaver herangefahren wird, um zum Beladen der Lademulde eine in einem Bereich an einem vorderen Ende der Lademulde, der das an einer dem Lenker oder dem mindestens einem Handgriff abgewandten Seite der Lademulde angeordnet ist, angeordnete und einen Teil des Bodens der Lademulde bildende Auflade-Vorrichtung oder Auflade- und Ablade-Vorrichtung in Gang zu setzen, durch die der zu transportierende Gegenstand oder der zu transportierende Tierkadaver automatisch in die Lademulde befördert wird, um anschließend den Transportvorgang zu beginnen und/oder die Transportkarre mindestens eine Auflade- und/oder Ablade-Vorrichtung aufweist, wobei die mindestens eine Auflade- und/oder Ablade-Vorrichtung einen Antrieb aufweist, wobei die Transportkarre zum Entladen der Lademulde an einen Entladeort gefahren wird, um zum Entladen eine an dem vorderen Ende der Lademulde angeordnete und einen Teil des Bodens der Lademulde bildende Ablade-Vorrichtung oder die Auflade- und Ablade-Vorrichtung in Gang zu setzen, durch die der transportierte Gegenstand oder der transportierte Tierkadaver automatisch aus der Lademulde befördert wird, läuft eine Bedienperson während des Transportes hinter der Transportkarre her oder steht oder sitzt auf der Transportkarre.

Nach einer zusätzlichen vorteilhaften Ausgestaltung des erfindungsgemäßen Verfahrens liegt der zu transportierende Gegenstand oder der zu transportierende Tierkadaver auf dem Boden und wird die Auflade-Vorrichtung oder die Auflade- und Ablade-Vorrichtung zum Beladen zwischen den Boden und den zu transportierenden Gegenstand oder der zu transportierenden Tierkadaver verbracht.

Nach einer zusätzlichen vorteilhaften Ausgestaltung des erfindungsgemäßen Verfahrens wird der zu transportierende Gegenstand oder der zu transportierende Tierkadaver zum Beladen und/oder der transportierte Gegenstand oder der transportierte Tierkadaver zum Entladen nicht von der Bedienperson berührt.

Nach einer zusätzlichen vorteilhaften Ausgestaltung des erfindungsgemäßen Verfahrens ist die Transportkarre eine Transportkarre nach einem der Ansprüche 1 bis 18.

Weitere Vorteile und vorteilhafte Ausgestaltung der Erfindung sind der nachfolgenden Beschreibung, der Zeichnung und den Ansprüchen entnehmbar.

### Zeichnung

Ein bevorzugtes Ausführungsbeispiel des erfindungsgemäßen Gegenstands ist in der Zeichnung dargestellt und wird im Folgenden näher erläutert. Es zeigen
- Fig. 1: eine perspektivische Ansicht einer erfindungsgemäßen Transportkarre,
- Fig. 2: eine Rückansicht einer erfindungsgemäßen Transportkarre und
- Fig. 3: eine Seitenansicht einer erfindungsgemäßen Transportkarre.

### Beschreibung des Ausführungsbeispiels

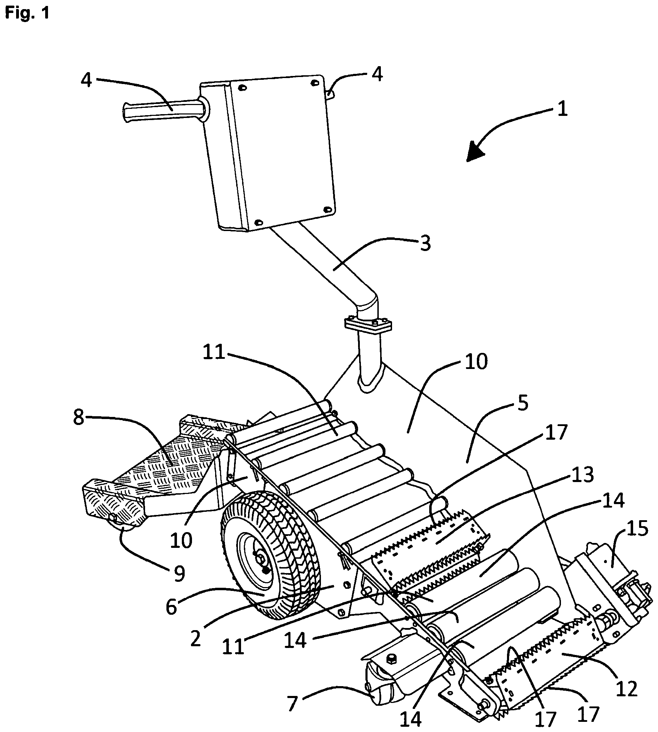

Fig. 1 zeigt eine perspektivische Ansicht einer erfindungsgemäßen Transportkarre 1. Die Transportkarre 1 weist einen Rahmen 2 auf, an dem ein Lenker 3 mit Handgriffen 4 und eine Lademulde 5 angeordnet sind. Des Weiteren weist die Transportkarre 1 beidseitig an einer Achse angeordnete Räder 6 auf. Zur zusätzlichen Abstützung der Transportkarre 1 dienen Rollen 7, die lenkbar sind, wodurch die Transportkarre 1 sehr wendig ist. An dem Rahmen 2 ist ein an- und abkoppelbarer Anhänger 8, der beidseitig an einer Achse angeordnete Räder 9 aufweist, angeordnet, auf dem eine nicht dargestellte Bedienperson stehen kann, während sie sich an den Handgriffen 4 haltend die Transportkarre 1 z.B. im Fahrbetrieb, der durch einen nicht dargestellten Elektromotor bewerkstelligt wird, bedient. Bevorzugt weist der Anhänger 8 eine rutschfeste Oberfläche (z.B. Tränenblech) auf, um der Bedienperson einen sicheren Stand zu gewährleisten.

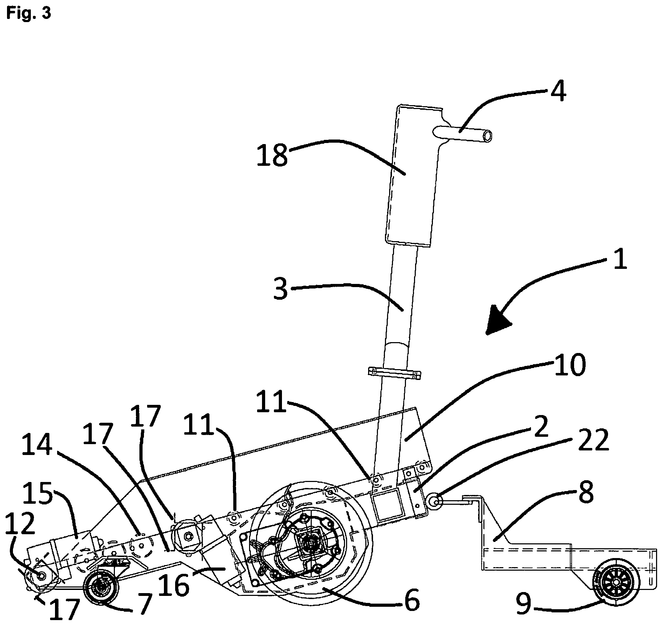

Um einen Gegenstand oder einen Tierkadaver zu transportieren weist die Lademulde 5 geneigte Seitenwände 10 und einen Boden auf, an dem Rollen 11 angeordnet sind. Am vorderen Ende der Lademulde 5 befindet sich eine Auflade- und/oder Ablade-Vorrichtung 12, die durch eine Auflade- und/oder Ablade-Vorrichtung 13 und dazwischen angeordnete Transportrollen 11, die eine Gummierung 14 aufweisen, unterstützt wird. Die Auflade- und/oder Ablade-Vorrichtung 12 ist mittels eines Elektromotors 15 antreibbar. Ebenso ist die Auflade- und/oder Ablade-Vorrichtung 13 über einen in Fig. 3 dargestellten Elektromotor 16 antreibbar. Die Elektromotoren 15 und 16 ermöglichen eine Rotation der Auflade- und/oder Ablade-Vorrichtungen 12 und 13 in beide Richtungen, so dass zum Beladen der Lademulde 5 die Auflade- und/oder Ablade-Vorrichtungen 12 und 13 in die eine Richtung und zum Entladen der Lademulde 5 die Auflade- und/oder Ablade-Vorrichtungen 12 und 13 in die andere Richtung rotiert. Bevorzugt sind die Auflade- und/oder Ablade-Vorrichtungen 12 und 13 viereckig ausgestaltet und weisen an ihren Ecken Zackenleisten 17 auf. Die Zackenleisten 17 bieten den Vorteil, dass ein am Boden liegender Gegenstand oder ein am Boden liegender Tierkadaver angehoben wird, so dass sich die Transportkarre 1 während der Beladung des Gegenstandes oder des Tierkadavers in die Lademulde 5 (ggfls. unterstützt durch eine Vorwärtsfahrt der Transportkarre 1) zwischen den Gegenstand oder den Tierkadaver und den Boden schiebt und/oder der Gegenstand oder der Tierkadaver in die Lademulde 5 gezogen wird. Bevorzugt ist der Lenker 3 asymmetrisch am Rahmen 2 angeordnet, so dass die Lademulde 5 an ihrem der Auflade- und/oder Ablade-Vorrichtung 12 abgewandten Ende offen ist, wodurch auch Gegenstände oder Tierkadaver mit der Transportkarre 1 transportiert werden können, die länger als die Lademulde 5 sind. Zum Entladen der Lademulde 5 rotieren die Auflade- und/oder Ablade-Vorrichtungen 12 und 13 in die entgegengesetzte Richtung, wodurch der Gegenstand oder der Tierkadaver aus der Lademulde 5 befördert wird. Durch die die Auflade- und/oder Ablade-Vorrichtungen 12 und 13 erübrigt es sich somit, dass eine Bedienperson den auf- oder abzuladenden Gegenstand oder Tierkadaver berühren muss.

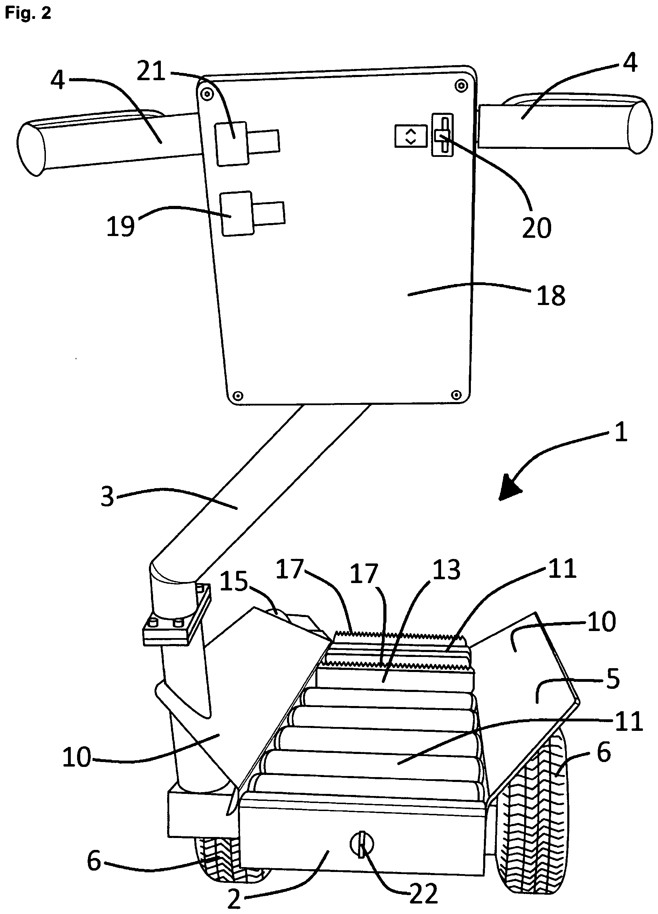

Fig. 2 zeigt eine Rückansicht einer erfindungsgemäßen Transportkarre 1. Dabei ist die Bedienkonsole 18, die einen Ein/Aus-Schalter 19 für die Transportkarre 1, einen Wippschalter 20 für den Vorwärts- und Rückwärtsfahrbetrieb und einen Wippschalter 21, mit dem die Auflade- und/oder Ablade-Vorrichtungen 12 und 13 bedient werden, aufweist, sichtbar. Über die Anhängerkupplung 22 ist ein nicht dargestellter Anhänger an den Rahmen 2 ankoppelbar.

Fig. 3 zeigt eine Seitenansicht einer erfindungsgemäßen Transportkarre 1.

### Bezugszahlenliste

- 1: Transportkarre
- 2: Rahmen
- 3: Lenker
- 4: Handgriff
- 5: Lademulde
- 6: Rad
- 7: Rolle
- 8: Anhänger
- 9: Rad
- 10: Seitenwand
- 11: Transportrolle
- 12: Auf- und/oder Abladevorrichtung
- 13: Auf- und/oder Abladevorrichtung
- 14: Gummierung
- 15: Elektromotor
- 16: Elektromotor
- 17: Zackenleiste
- 18: Bedienkonsole
- 19: Ein/Aus-Schalter
- 20: Wippschalter
- 21: Wippschalter
- 22: Anhängerkupplung

## Patentansprüche

1. Transportkarre (1),
- mit einem Rahmen (2),
- mit mindestens einer Achse mit beidseitig mindestens je einem Rad (6),
- mit einem Lenker (3) und/oder mit mindestens einem Handgriff (4) und
- mit einer eine Breite, einen Boden und ein vorderes Ende aufweisenden Lademulde (5), die einen Bereich aufweist, der an einer dem Lenker (3) und/oder dem mindestens einem Handgriff (4) abgewandten Seite der Lademulde (5) angeordnet ist, wobei der Bereich mindestens eine Auflade- und/oder Ablade-Vorrichtung (12, 13) aufweist,
wobei die mindestens eine Auflade- und/oder Ablade-Vorrichtung (12, 13) einen Teil des Bodens der Lademulde (5) bildet und in beide Richtungen rotierbar ist und die Auflade- und/oder Ablade-Vorrichtung (12) am vorderen Ende der Lademulde (5) angeordnet ist,
**dadurch gekennzeichnet,**
**dass** die mindestens eine Auflade- und/oder Ablade-Vorrichtung (12, 13) einen Antrieb aufweist.

2. Transportkarre (1), nach Anspruch 1,
**dadurch gekennzeichnet,**
**dass** mindestens eine Auflade- und/oder Ablade-Vorrichtung (12, 13) zumindest teilweise die Breite der Lademulde (5) einnimmt.

3. Transportkarre (1), nach Anspruch 1 oder Anspruch 2,
**dadurch gekennzeichnet,**
**dass** mindestens eine Auflade- und/oder Ablade-Vorrichtung (12, 13) einen runden oder eckigen Querschnitt aufweist.

4. Transportkarre (1), nach einem der vorhergehenden Ansprüche,
**dadurch gekennzeichnet,**
**dass** mindestens eine Auflade- und/oder Ablade-Vorrichtung (12, 13) rohrförmig ist.

5. Transportkarre (1), nach einem der vorhergehenden Ansprüche,
**dadurch gekennzeichnet,**
**dass** mindestens eine Auflade- und/oder Ablade-Vorrichtung (12, 13) mindestens einen Zinken, mindestens eine Leiste, mindestens eine Zackenleiste (17) und/oder ein Förderband aufweist.

6. Transportkarre (1), nach einem der vorhergehenden Ansprüche,
**dadurch gekennzeichnet,**
**dass** der Antrieb eine Steuerung aufweist, durch die die Drehrichtung und/oder Drehgeschwindigkeit steuerbar sind.

7. Transportkarre (1), nach einem der vorhergehenden Ansprüche,
**dadurch gekennzeichnet,**
**dass** der Antrieb ein Elektromotor (15, 16) oder ein Verbrennungsmotor ist.

8. Transportkarre (1), nach einem der vorhergehenden Ansprüche,
**dadurch gekennzeichnet,**
**dass** die Lademulde (5) mindestens eine drehbar gelagerte Rolle aufweist.

9. Transportkarre (1), nach Anspruch 8,
**dadurch gekennzeichnet,**
**dass** mindestens eine Rolle zumindest teilweise die Breite der Lademulde (5) einnimmt.

10. Transportkarre (1), nach einem der vorhergehenden Ansprüche,
**dadurch gekennzeichnet,**
**dass** die Transportkarre (1) einen Fahrantrieb aufweist.

11. Transportkarre (1), nach Anspruch 10,
**dadurch gekennzeichnet,**
**dass** der Antrieb eine Steuerung aufweist, durch die die Fahrtrichtung und/oder Fahrgeschwindigkeit steuerbar sind.

12. Transportkarre (1), nach Anspruch 10 oder Anspruch 11,
**dadurch gekennzeichnet,**
**dass** der Antrieb ein Elektromotor oder ein Verbrennungsmotor ist.

13. Transportkarre (1), nach einem der vorhergehenden Ansprüche,
**dadurch gekennzeichnet,**
**dass** die Transportkarre (1) mindestens ein Stützrad und/oder mindestens eine Stützkufe aufweist.

14. Transportkarre (1), nach Anspruch 13,
**dadurch gekennzeichnet,**
**dass** das mindestens eine Stützrad um eine vertikale Achse schwenkbar ist.

15. Transportkarre (1), nach einem der vorhergehenden Ansprüche,
**dadurch gekennzeichnet,**
**dass** die Transportkarre (1) eine Sitzfläche und/oder eine Stehfläche für eine Bedienperson aufweist.

16. Transportkarre (1), nach Anspruch 15,
**dadurch gekennzeichnet,**
**dass** die Sitzfläche und/oder die Stehfläche an einem vom Rahmen (2) an- und abkoppelbaren Anhänger (8) angeordnet sind.

17. Transportkarre (1), nach Anspruch 16,
**dadurch gekennzeichnet,**
**dass** der Anhänger (8) mindestens zwei Räder (9) aufweist.

18. Transportkarre (1), nach einem der vorhergehenden Ansprüche,
**dadurch gekennzeichnet,**
**dass** die Transportkarre (1) eine Kadaverkarre ist.

19. Verfahren zum Transportieren von Gegenständen oder Tierkadavern mittels einer Transportkarre (1), die einen Rahmen (2), mindestens eine Achse mit beidseitig mindestens je einem Rad (6), einen Lenker (3) und/oder mindestens einen Handgriff (4) und eine einen Boden aufweisende Lademulde (5) aufweist, wobei die Transportkarre (1) mindestens eine Auflade- und/oder Ablade-Vorrichtung (12, 13) aufweist,
**dadurch gekennzeichnet,**
**dass** die mindestens eine Auflade- und/oder Ablade-Vorrichtung (12, 13) einen Antrieb aufweist, wobei die Transportkarre (1) zum Beladen der Lademulde (5) an den zu transportierenden Gegenstand oder den zu transportierenden Tierkadaver herangefahren wird, um zum Beladen der Lademulde (5) eine an einem vorderen Ende der Lademulde (5), das an einer dem Lenker (3) und/oder dem mindestens einem Handgriff (4) abgewandten Seite der Lademulde (5) angeordnet ist, angeordnete und einen Teil des Bodens der Lademulde (5) bildende Auflade-Vorrichtung oder Auflade- und Ablade-Vorrichtung (12) in Gang zu setzen, durch die der zu transportierende Gegenstand oder der zu transportierende Tierkadaver automatisch in die Lademulde (5) befördert wird, um anschließend den Transportvorgang zu beginnen
und/oder dass die mindestens eine Auflade- und/oder Ablade-Vorrichtung (12, 13) einen Antrieb aufweist, wobei die Transportkarre (1) zum Entladen der Lademulde (5) an einen Entladeort gefahren wird, um zum Entladen eine an dem vorderen Ende der Lademulde (5) angeordnete und einen Teil des Bodens der Lademulde (5) bildende Ablade-Vorrichtung oder die Auflade- und Ablade-Vorrichtung (12) in Gang zu setzen, durch die der transportierte Gegenstand oder der transportierte Tierkadaver automatisch aus der Lademulde (5) befördert wird.

20. Verfahren, nach Anspruch 19,
**dadurch gekennzeichnet,**
**dass** eine Bedienperson während des Transportes hinter der Transportkarre (1) her läuft oder auf der Transportkarre (1) steht oder sitzt.

21. Verfahren, nach Anspruch 19 oder Anspruch 20,
**dadurch gekennzeichnet,**
**dass** der zu transportierende Gegenstand oder der zu transportierende Tierkadaver auf dem Boden liegt und die Auflade-Vorrichtung oder die Auflade- und Ablade-Vorrichtung (12) zum Beladen zwischen den Boden und den zu transportierenden Gegenstand oder der zu transportierenden Tierkadaver verbracht wird.

22. Verfahren, nach einem der Ansprüche 19 bis 21,
**dadurch gekennzeichnet,**
**dass** der zu transportierende Gegenstand oder der zu transportierende Tierkadaver zum Beladen und/oder der transportierte Gegenstand oder der transportierte Tierkadaver zum Entladen nicht von der Bedienperson berührt wird.

23. Verfahren, nach einem der Ansprüche 19 bis 22,
**dadurch gekennzeichnet,**
**dass** die Transportkarre (1) eine Transportkarre (1) nach einem der Ansprüche 1 bis 18 ist.

## Claims

1. A transport cart (1),
- having a frame (2),
- having at least one axle with at least one wheel (6) on each side,
- having a handlebar (3) and/or having at least one handle (4) and
- having a charging trough (5) with a width, a base and a front end which has an area arranged on a side of the charging trough (5) farthest from the handlebar (3) and/or the at least one handle (4), wherein the area has at least one loading and/or unloading device (12, 13)
wherein the at least one loading and/or unloading device (12, 13) forms a part of the base of the charging trough (5) and can be rotated in both directions, and the loading and/or unloading device (12, 13) is arranged on the front end of the charging trough (5),
**characterized in**
**that** the at least one loading and/or unloading device (12, 13) has a drive unit.

2. The transport cart (1) according to claim 1,
**characterized in**
**that** at least one loading and/or unloading device (12, 13) occupies at least a part of the width of the charging trough (5).

3. The transport cart (1) according to claim 1 or claim 2,
**characterized in**
**that** at least one loading and/or unloading device (12, 13) has a round or angular cross section.

4. The transport cart (1) according to any one of the preceding claims,
**characterized in**
**that** at least one loading and/or unloading device (12, 13) is tubular.

5. The transport cart (1) according to any one of the preceding claims,
**characterized in**
**that** at least one loading and/or unloading device (12, 13) has at least one tine, at least one bar, at least one serrated bar (17) and/or a conveyer.

6. The transport cart (1) according to any one of the preceding claims,
**characterized in**
**that** the drive unit has a controller by means of which the turning direction and/or turning speed are controllable.

7. The transport cart (1) according to any one of the preceding claims,
**characterized in**
**that** the drive unit is an electric motor (15, 16) or an internal combustion engine.

8. The transport cart (1) according to any one of the preceding claims,
**characterized in**
**that** the charging trough (5) includes at least one pivotable mounted roller.

9. The transport cart (1) according to claim 8,
**characterized in**
**that** the at least one roller occupies at least a part of the width of the charging trough (5).

10. The transport cart (1) according to any one of the preceding claims,
**characterized in**
**that** the transport cart (1) has a propulsion unit.

11. The transport cart (1) according to claim 10,
**characterized in**
**that** the propulsion unit has a controller by means of which the travel direction and/or travel speed are controllable.

12. The transport cart (1) according to claim 10 or claim 11,
**characterized in**
**that** the propulsion unit is an electric motor or an internal combustion engine.

13. The transport cart (1) according to any one of the preceding claims,
**characterized in**
**that** the transport cart (1) has at least one support wheel and/or at least one support skid.

14. The transport cart (1) according to claim 13,
**characterized in**
**that** the at least one support wheel is pivotable about a vertical axis.

15. The transport cart (1) according to any one of the preceding claims,
**characterized in**
**that** the transport cart (1) has a seating surface and/or a standing surface for an operating person.

16. The transport cart (1) according to claim 15,
**characterized in**
**that** the seating surface and/or standing surface is/are provided on a trailer (8) that can be hitched to and unhitched from the frame (2).

17. The transport cart (1) according to claim 16,
**characterized in**
**that** the trailer (8) has at least two wheels (9).

18. The transport cart (1) according to any one of the preceding claims,
**characterized in**
**that** the transport cart (1) is a carcass trolley.

19. A method for transporting objects or animal carcasses using a transport cart (1) that has a frame (2), at least one axle with at least one wheel (6) on each side, a handlebar (3) and/or at least one handle (4) and a charging trough (5) with a base,
wherein the transport cart (1) has at least one loading and/or unloading device (12, 13)
**characterized in**
**that** the at least one loading and/or unloading device (12, 13) has a drive unit, wherein the transport cart (1) is driven to the object or the animal carcass that is to be transported for the purpose of loading the charging trough (5), in order to activate a loading device or a loading and unloading device (12) which for loading the charging trough (5) is disposed on a front end of the charging trough (5) arranged on a side of the charging trough (5) farthest from the handlebar (3) and/or the at least one handle (4) and occupies a part of the base of the charging trough (5) by which the object or animal carcass to be transported is delivered automatically to the charging trough (5), in order to subsequently initiate the transport operation,
and/or
**that** the at least one loading and/or unloading device (12, 13) has a drive unit, wherein the transport cart (1) is driven to an unloading site for unloading the charging trough (5) in order to activate an unloading device or a loading and unloading device (12) which for unloading the charging trough (5) is disposed on a front end of the charging trough (5), by which the object or animal carcass transported is automatically removed from the charging trough (5).

20. The method according to claim 19,
**characterized in**
**that** during the transport operation an operating person walks behind the transport cart (1) or stands or sits on the transport cart (1).

21. The method according to claim 19 or claim 20,
**characterized in**
**that** the object or animal carcass to be transported lies on the base and the loading device or the loading and unloading device (12) is brought into position between the base and the object or animal carcass to be transported for loading.

22. The method according to any one of claims 19 to 21,
**characterized in**
**that** the operating person does not touch the object or animal carcass to be transported for loading and/or the object or animal carcass to be transported for unloading.

23. The method according to any one of claims 19 to 22,
**characterized in**
**that** during the transport cart (1) is a transport cart (1) according to any one of claims 1 to 18.

## Revendications

1. Chariot de transport (1),
- pourvu d'un cadre (2),
- pourvu d'au moins un axe doté de part et d'autre d'au moins une roue (6),
- pourvu d'un guidon (3) et/ou d'au moins une poignée (4) et
- pourvu d'une benne (5) comportant une largeur, un fond inférieur et une extrémité avant qui comporte une zone qui est placée sur un côté de la benne (5) qui est opposé au guidon (3) et/ou à l'au moins une poignée (4), la zone comportant au moins un dispositif de chargement et/ou de déchargement (12, 13),
l'au moins un dispositif de chargement et/ou de déchargement (12, 13) formant une partie du fond inférieur de la benne (5) et étant rotative dans les deux directions et le dispositif de chargement et/ou de déchargement (12) étant placé sur l'extrémité avant de la benne (5),
**caractérisé en ce**
**que** l'au moins un dispositif de chargement et/ou de déchargement (12, 13) comporte un entraînement.

2. Chariot de transport (1), selon la revendication 1,
**caractérisé en ce**
**qu'**au moins un dispositif de chargement et/ou de déchargement (12, 13) occupe au moins en partie la largeur de la benne (5).

3. Chariot de transport (1), selon la revendication 1 ou la revendication 2,
**caractérisé en ce**
**qu'**au moins un dispositif de chargement et/ou de déchargement (12, 13) présente une section transversale ronde ou angulaire.

4. Chariot de transport (1), selon l'une quelconque des revendications précédentes,
**caractérisé en ce**
**qu'**au moins un dispositif de chargement et/ou de déchargement (12, 13) est de forme tubulaire.

5. Chariot de transport (1), selon l'une quelconque des revendications précédentes,
**caractérisé en ce**
**qu'**au moins un dispositif de chargement et/ou de déchargement (12, 13) comporte au moins une dent, au moins un tasseau, au moins un tasseau denté (17) et/ou une bande de transport.

6. Chariot de transport (1), selon l'une quelconque des revendications précédentes,
**caractérisé en ce**
**que** l'entraînement comporte un système de commande susceptible de commander le sens de rotation et/ou la vitesse de rotation.

7. Chariot de transport (1), selon l'une quelconque des revendications précédentes,
**caractérisé en ce**
**que** l'entraînement est un moteur électrique (15, 16) ou un moteur thermique.

8. Chariot de transport (1), selon l'une quelconque des revendications précédentes,
**caractérisé en ce**
**que** la benne (5) comporte au moins une roulette logée en rotation.

9. Chariot de transport (1), selon la revendication 8,
**caractérisé en ce**
**qu'**au moins une roulette occupe au moins en partie la largeur de la benne (5).

10. Chariot de transport (1), selon l'une quelconque des revendications précédentes,
**caractérisé en ce**
**que** le chariot de transport (1) comporte une transmission.

11. Chariot de transport (1), selon la revendication 10,
**caractérisé en ce**
**que** l'entraînement comporte un système de commande susceptible de commander la direction de déplacement et/ou la vitesse de déplacement.

12. Chariot de transport (1), selon la revendication 10 ou la revendication 11,
**caractérisé en ce**
**que** l'entraînement est un moteur électrique ou un moteur thermique.

13. Chariot de transport (1), selon l'une quelconque des revendications précédentes,
**caractérisé en ce**
**que** le chariot de transport (1) comporte au moins une roue d'appui et/ou au moins un patin d'appui.

14. Chariot de transport (1), selon la revendication 13,
**caractérisé en ce**
**que** l'au moins une roue d'appui est susceptible de pivoter autour d'un axe vertical.

15. Chariot de transport (1), selon l'une quelconque des revendications précédentes,
**caractérisé en ce**
**que** le chariot de transport (1) comporte une surface d'assise et/ou une surface de positionnement pour un opérateur.

16. Chariot de transport (1), selon la revendication 15,
**caractérisé en ce**
**que** la surface d'assise et/ou la surface de positionnement est placée sur une remorque (8) susceptible d'être accouplée ou désaccouplée du cadre (2) .

17. Chariot de transport (1), selon la revendication 16,
**caractérisé en ce**
**que** la remorque (8) comporte au moins deux roues (9).

18. Chariot de transport (1), selon l'une quelconque des revendications précédentes,
**caractérisé en ce**
**que** le chariot de transport (1) est un chariot à cadavres.

19. Procédé de transport d'objets ou de cadavres d'animaux à l'aide d'un chariot de transport (1), qui comporte un cadre (2), au moins un axe doté de part et d'autre d'au moins une roue (6), un guidon (3) et/ou au moins une poignée (4) et une benne (5) comportant un fond inférieur,
le chariot de transport (1) comportant au moins un dispositif de chargement et/ou de déchargement (12, 13),
**caractérisé en ce**
**que** l'au moins un dispositif de chargement et/ou de déchargement (12, 13) comporte un entraînement, pour charger la benne (5), le chariot de transport (1) étant amené vers l'objet à transporter ou le cadavre d'animal à transporter, pour dans le but de charger la benne (5), mettre en route un dispositif de chargement ou un dispositif de chargement et de déchargement (12) qui est placé sur une extrémité avant de la benne (5) se trouvant sur le côté de la benne (5) qui est opposé au guidon (3) et/ou à l'au moins une poignée (4) et qui forme un fond inférieur de la benne (5), à l'aide duquel l'objet à transporter ou le cadavre d'animal à transporter est convoyé automatiquement dans la benne (5), pour démarrer par la suite le processus de transport
et/ou
en ce que l'au moins un dispositif de chargement et/ou de déchargement (12, 13) comporte un entraînement, pour décharger la benne (5), le chariot de transport (1) étant amené en un lieu de déchargement, pour dans le but de décharger, mettre en route un dispositif de déchargement placé sur une extrémité avant de la benne (5) et formant une partie du fond inférieur de la benne (5) ou le dispositif de chargement et de déchargement (12), à l'aide duquel l'objet transporté ou le cadavre d'animal transporté est convoyé automatiquement hors de la benne (5).

20. Procédé, selon la revendication 19,
**caractérisé en ce**
**que** pendant le transport, un opérateur suit le chariot de transport (1) ou se tient debout ou assis sur le chariot de transport (1).

21. Procédé, selon la revendication 19 ou la revendication 20,
**caractérisé en ce**
**que** l'objet à transporter ou le cadavre d'animal à transporter repose sur le fond inférieur et en ce que pour le chargement, le dispositif de chargement ou le dispositif de chargement et de déchargement (12) est amené entre le fond inférieur et l'objet à transporter ou le cadavre d'animal à transporter.

22. Procédé, selon l'une quelconque des revendications 19 à 21,
**caractérisé en ce**
**que** pour le chargement, l'objet à transporter ou le cadavre d'animal à transporter et/ou pour le déchargement, l'objet à transporter ou le cadavre d'animal à transporter n'est pas touché par l'opérateur.

23. Procédé, selon l'une quelconque des revendications 19 à 22,
**caractérisé en ce**
**que** le chariot de transport (1) est un chariot de transport (1) selon l'une quelconque des revendications 1 à 18.
